Europäisches Patentamt

European Patent Office

Office européen des brevets

(19)

(11) **EP 0 535 103 B1**

(12) **FASCICULE DE BREVET EUROPEEN**

(45) Date de publication et mention de la délivrance du brevet:
**27.11.1996 Bulletin 1996/48**

(21) Numéro de dépôt: **91911906.5**

(22) Date de dépôt: **13.06.1991**

(51) Int. Cl.$^6$: **A61B 17/22**, G10K 15/06

(86) Numéro de dépôt international:
**PCT/FR91/00474**

(87) Numéro de publication internationale:
**WO 91/19459 (26.12.1991 Gazette 1991/29)**

(54) **PROCEDE DE CONTROLE DE L'EFFICACITE D'ONDES DE PRESSION EMISES PAR UN GENERATEUR D'ONDES DE PRESSION**

VERFAHREN ZUM STEUERN DES DRUCKWELLENWIRKUNGSGRADES EINES DRUCKWELLENSENDERS

METHOD FOR MONITORING THE EFFECTIVENESS OF PRESSURE WAVES FROM A PRESSURE WAVE GENERATOR

(84) Etats contractants désignés:
**DE DK FR GB IT SE**

(30) Priorité: **20.06.1990 FR 9007734**

(43) Date de publication de la demande:
**07.04.1993 Bulletin 1993/14**

(73) Titulaires:
- **TECHNOMED MEDICAL SYSTEMS**
  **69120 Vaulx-en-Velin (FR)**
- **INSTITUT NATIONAL DE LA SANTE ET DE LA RECHERCHE MEDICALE (INSERM)**
  **75654 Paris Cédex 13 (FR)**

(72) Inventeurs:
- **DANCER, Paul**
  **F-42100 S.-Etienne (FR)**
- **BOURLION, Maurice**
  **F-42400 S.-Chamond (FR)**
- **COLOMBIER, Jacques**
  **F-69008 Lyon (FR)**

(74) Mandataire: **Portal, Gérard et al**
  **Cabinet Beau de Loménie**
  **158, rue de l'Université**
  **75340 Paris Cédex 07 (FR)**

(56) Documents cités:
**EP-A- 0 242 237      EP-A- 0 256 202**
**WO-A-88/02250      DE-A- 2 722 252**
**DE-A- 3 545 379      DE-U- 8 619 099**

- **BIOMEDIZINISCHE TECHNIK, vol. 34, no. 4, April 1989, (Berlin, DE), M. MÜLLER: "Die Fokussierung von Wasserstosswellen zur Lithotripsie durch verschiedene Ellipsoidreflektoren", pages 62-72**

## Description

La présente invention concerne essentiellement un procédé de contrôle de l'efficacité d'ondes de pression émises par un générateur d'ondes de pression, des procédés de réglage en comportant application, ainsi qu'un appareil de contrôle d'efficacité d'ondes de pression, pour sa mise en oeuvre.

Des générateurs d'ondes de pression sont bien connus à l'homme de l'art depuis le document US-A-2 559 227 (RIEBER). Ces ondes de pression, encore dénommées ondes de choc, sont utilisées pour réaliser le traitement thérapeutique à l'intérieur du corps de manière extracorporelle.

L'efficacité de l'onde de pression au point de traitement dépend de plusieurs paramètres importants fonction des caractéristiques du générateur de pression, qui est par exemple du type électro-hydraulique comme décrit dans RIEBER.

L'un de ces paramètres est constitué par le point de génération de l'onde de pression. Dans le cadre d'un générateur ellipsoïdal tronqué, il est très important que l'onde de pression soit générée exactement au foyer interne de l'ellipsoïde tronqué afin d'obtenir une bonne focalisation au second foyer externe.

Un autre paramètre réside dans la valeur de l'écartement des électrodes de décharge afin de générer des ondes de pression d'intensité correcte.

Les demandeurs ont proposé dans les documents FR-A-2 593 382, FR-A-2 598 074 et US-A-4 730 614 des dispositifs mécaniques de réglage de l'écartement entre les électrodes.

Le document EP-A-0,256,202 = US-A-4,813,402 décrit un élément de couplage comprenant un capteur d'ondes de pression disposé près de la zone focale, de sorte que le capteur reçoit l'onde de pression focalisée.

Par ailleurs, aucun dispositif connu ne permet un contrôle de la pression non-focalisée générée à chaque tir lors du traitement, ni aucun contrôle, en cours de traitement sans arrêter le traitement, du point de génération de l'onde de pression.

Ainsi, la présente invention a pour but de résoudre le nouveau problème technique consistant en la fourniture d'une solution permettant de contrôler efficacement les ondes de pression émises par un générateur d'ondes de pression, de préférence en temps réel, c'est-à-dire en cours de traitement sans arrêter le traitement, afin de pouvoir procéder éventuellement à une correction des caractéristiques du générateur d'ondes de pression.

La présente invention a encore pour but de résoudre le nouveau problème technique consistant en la fourniture d'une solution permettant d'effectuer le contrôle de l'efficacité d'ondes de pression de manière particulièrement simple, peu coûteuse, utilisable à l'échelle industrielle.

La présente invention a encore pour but de résoudre le nouveau problème technique consistant en la fourniture d'un procédé de réglage du point de génération des ondes de pression, de préférence en temps réel, c'est-à-dire en cours de traitement sans arrêter le traitement, d'une manière particulièrement simple, fiable et peu coûteuse.

La présente invention a encore pour but de résoudre le nouveau problème consistant en la fourniture d'un procédé de réglage de la valeur de pression d'onde de pression, en particulier focalisée à un foyer de focalisation, notamment un foyer externe.

La présente invention a encore pour but de résoudre le nouveau problème technique consistant en la fourniture d'un procédé de réglage du volume de la tache focale, de préférence en temps réel, c'est-à-dire en cours de traitement sans arrêter le traitement, d'une manière simple, fiable et peu coûteuse.

La présente invention a encore pour but de résoudre le nouveau problème technique consistant en la fourniture d'un procédé de réglage de l'écartement des électrodes dans le cadre de générateur d'ondes de pression de type électro-hydraulique par décharge électrique entre deux électrodes.

Tous ces problèmes techniques sont résolus pour la première fois par la présente invention d'une manière particulièrement simple, peu coûteuse, fiable, utilisable à l'échelle industrielle.

Ainsi, selon un premier aspect, la présente invention fournit un procédé de contrôle de l'efficacité d'ondes de pression, de préférence en temps réel, émises par un générateur d'ondes de pression de type focalisé, selon lequel :

- on prévoit au moins un capteur d'un paramètre caractéristique d'une onde de pression directe non focalisée, par exemple la pression, capable de capter ledit paramètre de ladite onde de pression directe non focalisée ;
- on dispose ce capteur sur le trajet de ladite onde de pression directe non focalisée de sorte que ledit capteur présente une position fixe relativement su générateur (14) ;
- on traite le signal émis par ledit capteur lors de la reception d'une onde de pression directe non focalisée en provenance d'un point de génération d'onde de pression, afin de connaître l'efficacité de l'onde de pression, fonction des caractéristiques du générateur ; et
- éventuellement on procède à une correction des caractéristiques du générateur d'ondes de pression.

Selon une variante de réalisation avantageuse de ce procédé, le capteur précité reçoit chaque onde de pression, et on enregistre le signal émis pour chaque onde de pression que l'on traite afin de connaître en temps réel l'efficacité de l'onde de pression et éventuellement de procéder en temps réel à une correction des caractéristiques du générateur.

Selon une autre caractéristique avantageuse du procédé selon l'invention, on traite le signal pour déterminer la valeur de la pression de l'onde de pression. Avantageusement, dans le cadre d'un générateur focalisant en un point focal, par exemple un foyer externe, on utilise la valeur de la pression de l'onde de pression directe non focalisée pour calculer la valeur de la pression focalisée au point focal.

Selon un autre mode de réalisation avantageux du procédé selon l'invention, dans le cadre d'un générateur focalisé comprenant un ellipsoïde tronqué, ayant un foyer interne où sont générées les ondes de pression par décharge électrique entre deux électrodes, et un foyer externe où les ondes de pressions sont focalisées, le procédé est caractérisé en ce qu'on utilise la valeur de l'onde de pression pour régler l'écartement initial des électrodes.

Selon un autre mode de réalisation avantageux du procédé selon l'invention, on détecte le temps de trajet de l'onde de pression depuis le point de génération jusqu'au capteur et on compare ce temps de trajet avec un temps de trajet de référence pour une onde émise au point de génération théorique.

De préférence, selon une variante de réalisation, on détecte le temps de trajet depuis le point de génération jusqu'à deux positions différentes connues du capteur, et on calcule l'écart de temps Delta.t mis par chaque onde pour aboutir à chacune des deux positions connues du capteur, et on utilise la valeur de l'écart de temps Delta.t pour déterminer la position réelle du point de génération de l'onde de pression.

Selon une variante de réalisation avantageuse, on compare cette valeur d'écart de temps avec une valeur d'écart de temps de référence résultant d'une onde de pression au point de génération théorique. En particulier, le point de génération théorique est constitué par le foyer interne d'un générateur ellipsoïdal tronqué. Dans ce cas, on dispose de préférence les deux positions connues du capteur à égale distance du foyer interne, et de préférence encore symétriquement par rapport au grand axe du réflecteur ellipsoïdal tronqué.

Selon un mode de réalisation avantageux, on utilise deux capteurs de pression que l'on dispose dans un plan de symétrie longitudinal du générateur, en particulier passant par les électrodes dans le cas d'un générateur d'ondes de pression par décharge électrique entre des électrodes.

Selon un autre mode de réalisation avantageux du procédé selon l'invention, on détermine la position du point réel de génération d'ondes de pression à partir de la formule mathématique suivante :

$$d = k \text{ x Delta.t}$$

dans laquelle $k = D : (LO \text{ x } v)$ .

Avec D = la distance entre les deux positions différentes connues du capteur, LO est la distance entre le point théorique ou idéal de génération de l'onde de pression et la position connue du capteur.

v est la vitesse de propagation du son dans le liquide de couplage, par exemple l'eau (1 480 m/s à 20°C).

d est la valeur du décalage entre le point théorique ou idéal de génération d'onde de pression et le point réel de génération de l'onde de pression.

Delta.t = la différence de temps de trajet mesurée.

Il est à noter que cette formule mathématique est valable pour des valeurs de décalage d faibles par rapport à la valeur de la distance D séparant les positions différentes de mesure du capteur, ce qui est en pratique toujours le cas.

Selon une autre variante de réalisation avantageuse du procédé selon l'invention, on détermine la position du point réel par rapport au point théorique en comparant la valeur de Delta.t avec une courbe étalonnée donnant le décalage d en fonction de Delta.t.

Selon une autre caractéristique avantageuse du procédé selon l'invention, on détermine la variation de la dispersion de la différence de temps Delta.t et on utilise avantageusement la variation de la dispersion pour maintenir l'écartement entre les électrodes constant. Avantageusement, on détermine l'écartement entre les électrodes à partir d'une courbe étalonnée donnant l'écartement entre les électrodes en fonction de la dispersion, de préférence écart-type, de la différence de temps Delta.t.

Selon un mode de realisation avantageux, la présente invention fournit un procédé de réglage du point de génération des ondes de pression dans lequel on détermine le décalage entre le point réel de génération des ondes de pression et le point théorique de génération des ondes de pression et on corrige la valeur de décalage en fonction de la position recherchée du point de génération des ondes de pression.

Selon une autre caractéristique avantageuse, la présente invention fournit encore un procédé de réglage du volume de la tache focale dans lequel on réalise un décalage prédéterminé du point réel de génération d'ondes de pression, par rapport au point théorique de génération d'ondes de pression, en fonction du volume recherché de la tache focale. Selon un mode de réalisation particulier, dans le cadre d'un générateur ellipsoïdal tronqué comportant un foyer interne et un foyer externe, le point théorique de génération d'ondes de pression est constitué par le foyer interne, la tache focale étant positionnée au foyer externe.

Selon un mode de réalisation avantageux la présente invention concerne encore un procédé de réglage de la valeur de la pression des ondes de pression focalisées au foyer externe d'un générateur ellipsoïdal tronqué, dans lequel on réalise un décalage prédéterminé du point réel de génération d'ondes de pression par rapport au point théorique de génération d'ondes de pression et/ou un écartement des électrodes, en fonction de la valeur de la pression recherchée au foyer externe.

Selon un mode de réalisation avantageux la présente invention concerne enfin un procédé de réglage de l'écartement des électrodes d'un générateur d'ondes de pression, ellipsoïdal tronqué rempli d'un liquide de couplage, dans lequel on détecte la valeur de pression des ondes de pression directes non focalisées, on avance les électrodes, on détecte une diminution brusque de la pression, indiquant la mise en contact des électrodes, et on procède à un retrait prédéterminé des électrodes, de manière à aboutir à un écartement précis des électrodes.

On conçoit ainsi qu'avec l'invention on obtient tous les avantages techniques déterminants précédemment énoncés en permettant ainsi de contrôler l'efficacité des ondes de pression émises par un générateur d'ondes de pression, en particulier par la détermination de la position réelle du point de génération des ondes de pression, de la valeur de la pression générée, de la valeur d'écartement des électrodes, ou encore du temps mis par l'onde de pression pour parcourir une distance connue ou prédéterminée entre le point de génération des ondes de pression et la surface d'un capteur de pression.

Les procédés selon l'invention permettent donc de pouvoir réaliser un centrage parfait des électrodes sur le point théorique de génération des ondes de pression, en particulier exactement au foyer interne d'un réflecteur ellipsoïdal tronqué, et ceci en temps réel.

Par ailleurs, la présente invention permet de régler à volonté le point de génération des ondes de pression, l'écartement des électrodes, le volume de la tache focale, ou encore la valeur de pression des ondes de pression focalisées, en particulier au foyer externe.

Ceci permet d'améliorer la sécurité et le contrôle du bon fonctionnement du générateur d'ondes de presssion, ce qui est très important dans le cadre d'un traitement thérapeutique. En effet, il est très important que le praticien puisse se rendre compte rapidement d'un mauvais rendement d'un générateur afin d'éviter de traiter des patients de manière inefficace.

Par ailleurs, par la possibilité de défocaliser volontairement les ondes de pression, il est possible d'obtenir au point de focalisation, par exemple le second foyer externe d'un générateur ellipsoïdal tronqué, des pressions plus faibles et des taches focales plus grandes afin de diminuer la douleur et d'adapter le traitement à la taille de la concrétion ou lithiase à détruire. Ceci permet également par l'emploi de taches focales plus grandes de taper plus souvent sur des calculs en mouvement en raison de la respiration. Ce réglage est automatique et extrêmement simple.

Enfin, selon un autre aspect, la présente invention fournit encore un appareil de contrôle de l'efficacité d'ondes de pression émises par un générateur d'ondes de pression de type focalisé, comprenant au moins un capteur d'un paramètre caractéristique d'une onde de pression directe non focalisée, par exemple la pression, capable de capter ledit paramètre de ladite onde de pression directe non focalisée, de position fixe relativement au générateur, et des moyens de traitement du signal émis par le capteur lors de la réception de l'onde de pression directe non focalisée par le capteur, afin de connaître l'efficacité de l'onde de pression en fonction des caractéristiques du générateur, et éventuellement des moyens de correction des caractéristiques du générateur d'ondes de pression.

Selon une variante de réalisation avantageuse, les moyens de traitement précités du signal comprennent un dispositif électronique de traitement de signal bien connu à l'homme de l'art, ainsi que des moyens de calcul, par exemple comprenant un ordinateur ou microordinateur, qui est avantageusement capable d'ordonner des corrections des caractéristiques du générateur d'ondes de pression en constituant ainsi simultanément les moyens de correction précités. Ces corrections peuvent être un écartement différent des électrodes, un décalage volontaire du point réel de génération des ondes de pression par une dissymétrie volontaire de positionnement des électrodes par rapport au point théorique de génération des ondes de pression, en combinaison des deux, ou encore une valeur différente de la pression de l'onde de pression générée, par exemple en réglant la valeur de la tension de la source haute tension, ou enfin un recentrage parfait sur le point de génération théorique des ondes de pression, en particulier le foyer interne d'un ellipsoïde tronqué.

L'invention concerne aussi un procédé de controle de l'efficacité d'ondes de pression émises par un générateur d'ondes de pression de type focalisé, selon lequel:

- ledit générateur focalisé comprend un ellipsoïde tronqué, ayant un foyer interne où sont générées les ondes de pression par décharge électrique entre deux électrodes et un foyer externe où les ondes de pression sont focalisées, la décharge étant générée par une source haute tension ;
- on prévoit au moins un capteur d'un paramètre caractéristique d'une onde de pression directe non focalisée, par exemple la pression capable de capter ledit paramètre de ladite onde de pression directe non focalisée ;
- on dispose ce capteur sur le trajet de ladite onde de pression directe non focalisée de sorte que ledit capteur présente une position fixe relativement audit générateur d'ondes de pression ;

- on traite le signal émis par ledit capteur lors de la réception d'une onde de pression directe non focalisée en provenance d'un point (E) de génération d'ondes de pression, afin de connaître l'efficacité de l'onde de pression, fonction des caractéristiques du générateur ; et
- éventuellement on procède à une correction des caractéristiques du générateur d'ondes de pression en réglant la valeur de la tension de la source haute tension.

Selon encore un autre aspect, l'invention concerne un appareil de contrôle de l'efficacité d'ondes de pression émis par un générateur d'ondes de pression de type focalisé, comprenant un ellipsoïde tronqué, ayant un foyer interne où sont générées les ondes de pression par décharge électrique entre deux électrodes, et un foyer externe où les ondes de pression sont focalisées, la décharge étant générée par une source haute tension, il comprend au moins un capteur d'un paramètre caractéristique d'une onde de pression directe non focalisée, par exemple la pression, capable de capter ledit paramètre de l'onde de pression directe non focalisée, de position fixe relativement audit générateur, et des moyens de traitement du signal émis par le capteur lors de la réception de l'onde de pression directe non focalisée, afin de connaître l'efficacité de l'onde de pression en fonction des caractéristiques du générateur et éventuellement des moyens de correction des caractéristiques du générateur d'ondes de pression, capables de régler la valeur de la tension de la source haute tension.

Selon une autre variante de l'invention, chaque capteur est incorporé dans le paroi du réflecteur éllipsoïdal.

D'autres buts, caractéristiques et avantages de la présente invention apparaîtront clairement à la lumière de la description explicative qui va suivre faite en référence aux dessins annexés représentant un mode de réalisation actuellement préféré d'un appareil de contrôle d'efficacité d'ondes de pression selon la présente invention, donné simplement à titre d'illustration et qui ne saurait donc en aucune façon limiter la portée de l'invention. Dans les dessins :

- la figure 1 représente schématiquement un appareil de contrôle d'efficacité d'ondes de pression émises par un dispositif générateur d'ondes de pression, selon un mode de réalisation préféré de la présente invention, incluant les moyens essentiels permettant de réaliser ce contrôle ;
- la figure 2 repésente schématiquement, en coupe axiale longitudinale, partiellement, le dispositif générateur d'ondes de pression comprenant un réflecteur ellipsoïdal tronqué rempli d'un liquide de couplage, les électrodes comportant un décalage d du point d'émission des ondes de pression par rapport au foyer interne F1, avec l'emploi de deux capteurs disposés à distance égale du foyer interne F1 et symétriquement par rapport au grand axe du réflecteur ellipsoïdal tronqué ;
- la figure 3 représente l'enregistrement des courbes de pression de chacun des deux capteurs des figures 1 et 2, en fonction du temps ;
- la figure 4 représente la courbe d'étalonnage obtenu du décalage ou décentrage d exprimé en millimètres (mm), en fonction de l'écart de temps Delta.t exprimé en nanosecondes (ns) ;
- la figure 5 représente la courbe d'amplitude de pression de l'onde de pression directe ou incidente exprimée en bars, en ordonnée, en fonction de l'écartement en millimètres (mm) des électrodes en abcisse ; et
- la figure 6 représente La courbe d'étalonnage de l'écart type sur la différence de temps Delta.t exprimée en nanosecondes (ns), en ordonnée, en fonction de l'écartement en millimètres (mm) des électrodes, en abcisse.

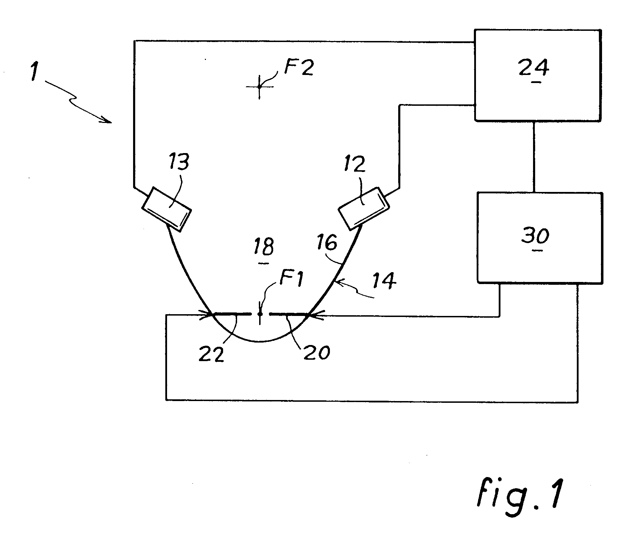

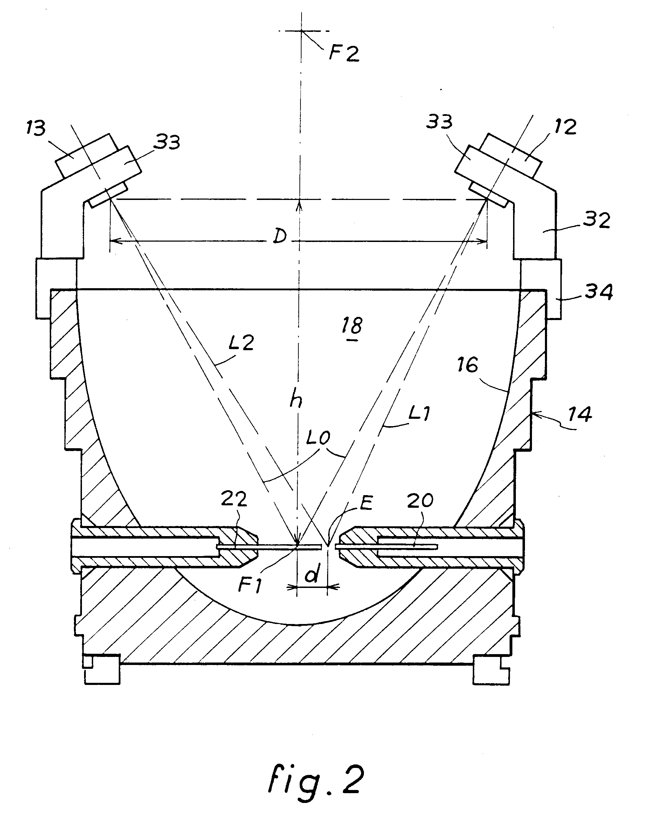

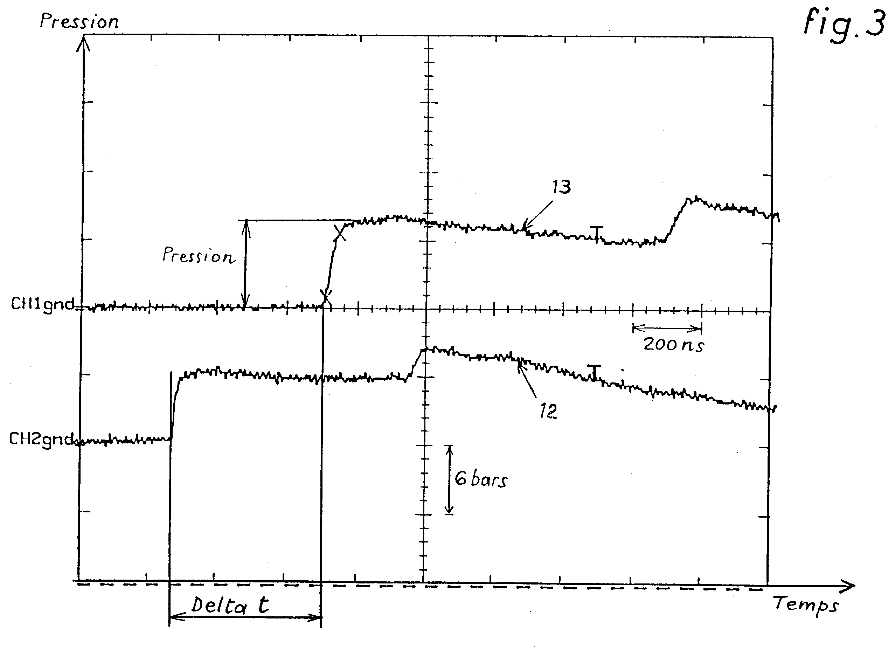

En référence aux figures 1 et 2, un appareil de contrôle de l'efficacité d'ondes de pression selon la présente invention est représenté par le numéro de référence général 10. Cet appareil de contrôle 10 comprend au moins un capteur 12, 13 de pression, capable de capter les pressions des ondes de pression émises par le dispositif générateur 14, comprenant un réflecteur ellipsoïdal tronque 16 comprenant un foyer interne F1 et un foyer externe F2. Le réflecteur ellipsoïdal tronqué 16 est habituellement rempli d'un liquide de couplage 18, en particulier de l'eau ou une solution aqueuse. Les ondes de pression sont émises au foyer F1, dans l'exemple représenté, par décharge électrique entre deux électrodes 20, 22, montées de préférence déplaçables en translation axiale et en rotation de manière à pouvoir être avancées ou reculées indépendamment à volonté selon l'axe de translation passant par le foyer F1 et les électrodes, comme cela est décrit en détail dans le document antérieur du déposant US-A-4 730 614, figure 3.

Selon la présente invention, l'appareil de contrôle 10 comprend au moins un capteur de pression 12, 13 disposé sur le trajet de l'onde de pression émise au foyer F1, et de préférence pour recevoir l'onde incidente ce pression. Cet appareil 10 comprend aussi des moyens 24 de traitement du signal émis par chaque capteur 12, 13 lors de la réception d'une onde de pression, afin de connaître l'efficacité de l'onde de pression fonction des caractéristiques du générateur 14. Ces moyens de traitement du signal 24 sont par exemple constitués par des moyens de traitement électroniques classiques bien connus à l'homme de l'art.

Les moyens 24 sont avantageusement couplés à des moyens de calcul 30 permettant de réaliser des divers calculs sur les résultats obtenus par les moyens de traitement 24 à partir du signal émis par les capteurs 12, 13, ces moyens de calcul 30 comprenant par exemple un ordinateur ou microordinateur. Ces moyens de calcul 30 constituent avantageusement des moyens de commande automatiques de l'avancement ou du retrait prédéterminé individuel de chacune des électrodes 20, 22.

Selon un mode de réalisation avantageux, comme représenté, on utilise deux capteurs de pression 12, 13 disposés à égale distance du foyer interne F1 et symétriquement par rapport au grand axe du réflecteur ellipsoïdal 16. Ainsi, les capteurs 12, 13 sont disposés dans un plan de symétrie longitudinale ou générateur 14 passant par les électrodes, c'est-à-dire le plan de coupe des figures 1 et 2.

Il est à noter que selon une variante de réalisation particulière, il est possible d'utiliser un seul capteur 12 ou 13, notamment lorsque les paramètres géométriques du réflecteur ellipsoïdal 16 ont été déterminés de façon précise par des mesures préalables.

Selon une autre variante de réalisation de l'appareil de contrôle selon l'invention, on utilise au moins trois capteurs de pression disposés à distance égale du foyer F1. Ces capteurs peuvent être disposés en dehors du plan des électrodes.

Selon un mode de réalisation avantageux, le ou les capteurs 12, 13 est monté sur un élément de positionnement 32 pouvant être fixé provisoirement au sommet du réflecteur ellipsoïdal 16, comme cela est clairement visible à la figure 2. Cet élément de positionnement 32 peut présenter une partie incurvée radialement vers l'intérieur 33 comportant un orifice dans lequel est inséré le capteur 12 ou 13, permettant d'orienter de manière précise le capteur en direction du foyer F1 donc du point de génération E des ondes de pression. On obtient ainsi de manière extrêmement simple un positionnement extrêmement précis des capteurs 12, 13 relativement au foyer F1. On observera que dans le cadre de l'emploi de deux capteurs 12, 13, ceux-ci sont positionnés de préférence de manière diamétralement opposée sur l'élément de positionnement 32 qui présente une forme annulaire. L'élément de positionnement 32 peut comporter un épaulement radial 34 annulaire facilitant la fixation provisoire sur le sommet du réflecteur ellipsoïdal 16.

Le fonctionnement de l'appareil de contrôle selon l'invention résulte clairement de la description précédente et est le suivant :

lorsqu'une onde de pression ou onde de choc est émise au foyer F1, ou au voisinage de celui-ci en un point E lorsque les électrodes sont décalées par rapport au foyer F1, par exemple d'une distance d, comme représenté à la figure 2, l'onde de pression émise se réfléchit sur le réflecteur ellipsoïdal tronqué 16 et est focalisée au foyer externe F2 où il est possible de mettre une cible en coincidence afin de réaliser un traitement de cette cible, par exemple un traitement chirurgical de celle-ci. On observera ou'à partir de la construction de l'appareil de contrôle selon l'invention, l'onde incidente émise est reçue par chaque capteur 12, 13. On observera que chaque capteur 12, 13 est à la distance LO du foyer F1, qui est le point théorique optimal de génération des ondes de pression, tandis que lorsque les électrodes sont décalées par rapport au foyer interne F1, par exemple disposées symétriquement par rapport au point E, la distance séparant le capteur 12 du point E est L1 et la distance séparant le capteur 13 du point E est L2.

Les capteurs 12 et 13 sont séparés entre eux de la distance D et sont situés dans un plan horizontal distant d'une hauteur h du foyer F1.

v est la vitesse de propagation du son dans le liquide de couplage, par exemple l'eau (1 480 m/s à 20°C).

d est la valeur de décalage entre le foyer interne F1 et l'origine E de l'onde de pression. Soit Delta.t la différence de temps de trajet mesurée entre les capteurs 12 et 13.

Les signaux de pression obtenus aux capteurs 12 et 13 sont enregistrés à la figure 3 et permettent de calculer la valeur de DeltaT d'une manière extrêmement simple.

Pour le cas des capteurs 12 et 13 dans le plan des électrodes 20, 22, on obtient les équations suivantes :

$$LO^2 = h^2 + (D/2)^2$$

$$L1^2 = h^2 + (D/2\text{-}d)^2$$

$$L2^2 = h^2 + (D/2\text{+}d)^2$$

$$Delta.t = (L2\text{-}L1)/v$$

Soit :

$$Delta.t = 1/v \times [[h^2 + (D/2\text{+}d)^2]^{0,5} \text{-} [h^2 + (D/2\text{-}d)^2]^{0,5}].$$

Cette équation donne une relation entre d et Delta.t.

Cette relation est linéaire pour des valeurs de d petites devant D et peut être simplifiée et s'écrire :

$$d = k \times Delta.t \text{ avec } k = D/(LO \times v)$$

On constate que k est une constante qui dépend de la géométrie du réflecteur.

Dans un exemple de réalisation particulier, on peut avoir D égal à 186 mm, h égal à 162 mm ce qui donne un coefficient de 672 ns par mm de décalage tandis que cette relation simplifiée est valable pour d inférieure à 65 mm.

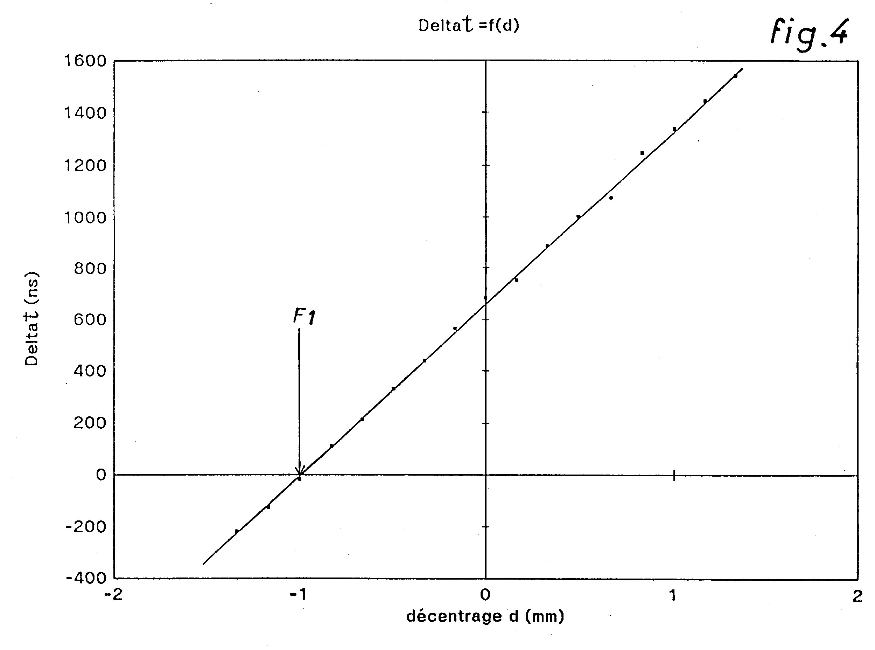

La courbe Delta.t en fonction du décalage ou décentrage par mm est donnée à la figure 4.

On constate ainsi que l'invention permet de déterminer de manière extrêmement simple le décalage du point d'émission des ondes de pression E par rapport au foyer F1.

Cette méthode peut donc être utilisée pour réaliser un décalage volontaire du point d'émission E des ondes de pression par rapport au foyer F1, ou inversement pour recentrer le point d'émission E par rapport au foyer F1, par déplacement correspondant des électrodes 20, 22.

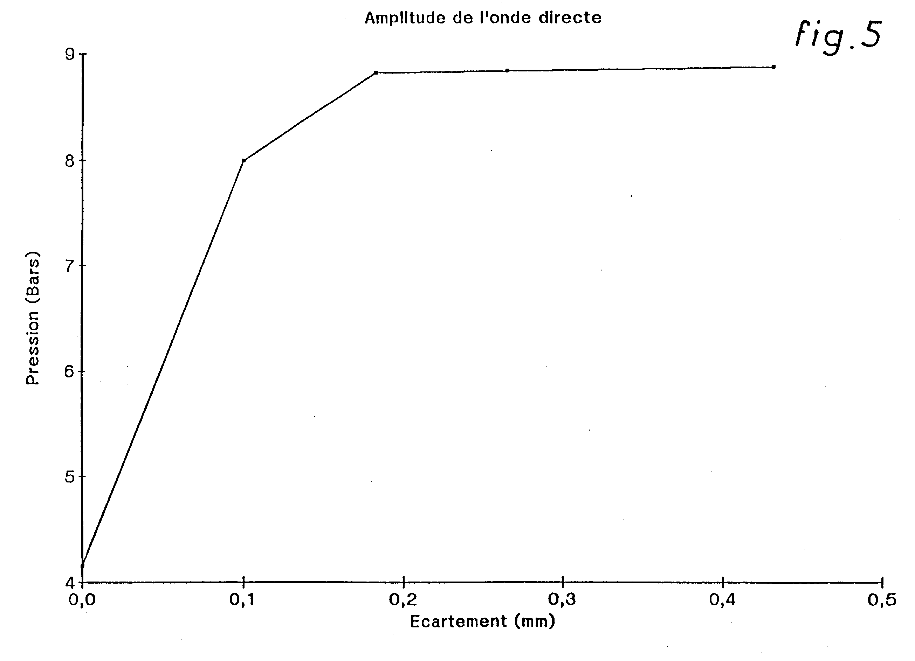

A la figure 5, on a tracé la courbe d'amplitude de pression de l'onde de pression directe ou incidente obtenue avec l'un ou l'autre des capteurs 12 ou 13, en fonction de l'écartement en mm des électrodes 20, 22.

Cette courbe permet de régler l'écartement initial des électrodes 20, 22, en utilisant le fait que la pression incidente varie brusquement lorsque les deux électrodes viennent en contact, l'onde de pression créée n'ayant plus d'efficacité.

Ainsi, il est possible de réaliser un écartement prédéterminé des électrodes 20, 22 par la détection de la pression de l'onde incidente détectée par le capteur, en réalisant un rapprochement des électrodes jusqu'à ce que la pression de l'onde incidente chute brusquement, ce qui correspond à un écartement nul, puis il est possible de procéder à un retrait d'une distance prédéterminée de chaque électrode pour obtenir l'écartement initial recherché.

La valeur d'amplitude de l'onde de pression incidente permet également de calculer la valeur de la pression appliquée au second foyer externe F2. Ce calcul peut être réalisé en prenant en compte le point d'émission réel E de l'onde de pression mesurée par la différence de temps Delta.t de trajet précité et de la valeur mesurée de la pression incidente.

L'invention permet également de réaliser un contrôle de l'écartement des électrodes par la variation de la dispersion sur la mesure de différence de temps Delta.t.

On observe en effet que la dispersion dépend directement de l'écartement entre les électrodes. On a observé que si les électrodes se rapprochent, la dispersion sur la différence de temps diminue tandis que si les électrodes s'écartent, la dispersion augmente. Ainsi, on peut maintenir un écartement correct initial en surveillant la dispersion sur la différence de temps en la maintenant constante.

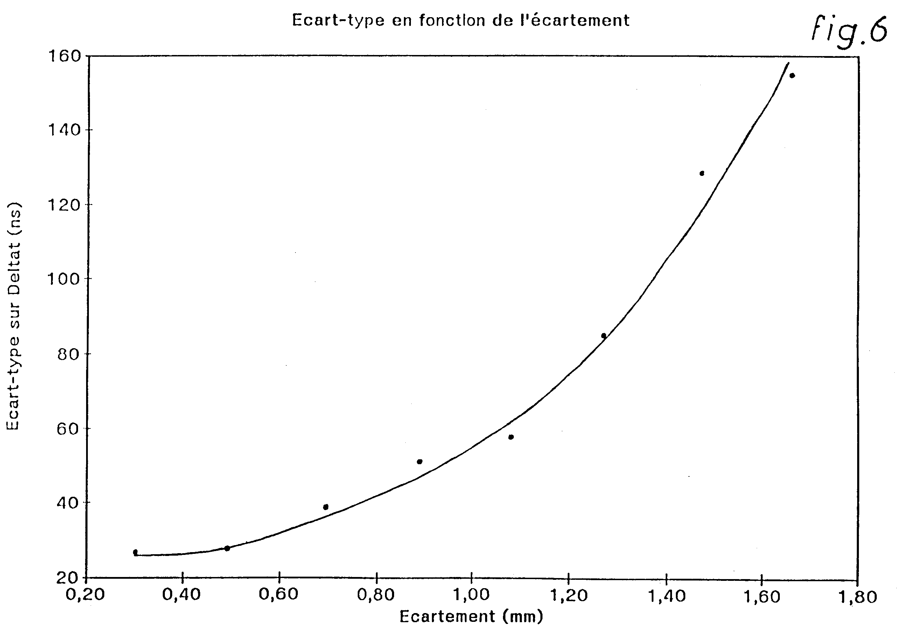

Toutes les mesures de dispersion peuvent être utilisées, soit l'étendue, l'écart moyen, l'intervalle semi-interquantile, l'écart type. Par exemple, on a représenté à la figure 6, l'écart type de la mesure de la différence de temps Delta.t (en ordonnées) en fonction de l'écartement en mm entre les électrodes (en abcisse). On obtient de cette façon une courbe d'étalonnage écart-type sur Delta.t relativement à l'écartement qui permet de connaître à tout instant si l'écartement entre les électrodes a changé, et donc de contrôler efficacement en temps réel les valeurs des ondes de pression.

En pratique, pour régler l'écartement des électrodes, on peut commencer par reculer les électrodes, par exemple de 0,15 mm pour être sûr d'être dans la partie plate de la courbe d'amplitude de la figure 5, puis on peut les avancer en procédant à une émission d'onde de pression après chaque avance, par pas de 0,05 mm jusqu'à perte d'environ 50% de pression incidente, ce qui indique que les deux électrodes sont en contact (voir figure 5).

Ensuite, il suffit de reculer chacune des électrodes d'une distance connue pour obtenir l'écartement désiré.

Par la suite, pour maintenir l'écartement entre les électrodres constant, il suffira de maintenir l'écart-type de la différence de temps entre les deux capteurs constants, en déplaçant automatiquement les électrodes (voir figure 6).

On peut donc constater de ce qui précède que la présence invention permet d'aboutir à des avantages techniques déterminants, particulièrement inattendus pour un homme de l'art.

## Revendications

1.  Procédé de contrôle de l'efficacité d'ondes de pression émises par un générateur d'ondes de pression de type focalisé, selon lequel :

    -   on prévoit au moins un capteur d'un paramètre caractéristique d'une onde de pression directe non focalisée, par exemple la pression (12, 13) capable de capter ledit paramètre de ladite onde de pression directe non focalisée ;
    -   on dispose ce capteur (12,13) sur le trajet de ladite onde de pression directe non focalisée de sorte que ledit capteur présente une position fixe relativement au dit générateur d'ondes de pression ;
    -   on traite le signal émis par ledit capteur (12, 13) lors de la réception d'une onde de pression directe non focalisée en provenance d'un point (E) de génération d'ondes de pression, afin de connaître l'efficacité de l'onde de pression, fonction des caractéristiques du générateur (14) ; et
    -   éventuellement on procède à une correction des caractéristiques du générateur (14) d'ondes de pression.

2.  Procédé selon la revendication 1, caractérisé en ce que le capteur précité (12, 13) reçoit chaque onde de pression, et on enregistre le signal émis pour chaque onde de pression que l'on traite afin de connaître en temps réel l'efficacité de l'onde de pression et éventuellement de procéder en temps réel à une correction des caractéristiques du générateur (14).

3. Procédé selon la revendication 1 ou 2, caractérisé en ce qu'on traite le signal pour déterminer la valeur de la pression de l'onde de pression.

4. Procédé selon la revendication 3, caractérisé en ce que, dans le cadre d'un générateur focalisant en un point focal (F2), par exemple un foyer externe, on utilise la valeur de la pression de l'onde de pression directe non focalisée pour calculer la valeur de la pression focalisée au point focal (F2).

5. Procédé selon l'une des revendications 1 à 4, caractérisé en ce que, dans le cadre d'un générateur (14) focalisé comprenant un ellipsoïde tronqué (16), ayant un foyer interne (F1) où sont générées les ondes de pression par décharge électrique entre deux électrodes (20, 22), et un foyer externe (F2) où les ondes de pression sont focalisées, on utilise la valeur de l'onde de pression pour régler l'écartement initial des électrodes (20 22).

6. Procédé selon l'une des revendications 1 à 5, caractérisé en ce qu'on détecte le temps de trajet de l'onde de pression depuis le point de génération (E) jusqu'au capteur (12, 13) et on compare ce temps de trajet avec un temps de trajet de référence pour une onde émise au point de génération théorique (F1).

7. Procédé selon la revendication 6, caractérisé en ce qu'on détecte le temps de trajet depuis le point de génération (E) jusqu'à deux positions différentes connues du capteur (12, 13), et on calcule l'écart de temps Delta.t mis par chaque onde pour aboutir à chacune des deux positions connues du capteur (12, 13), et on utilise la valeur de l'écart de temps Delta.t pour déterminer la position réelle (E) du point de génération de l'onde de pression.

8. Procédé selon la revendication 7, caractérisé en ce qu'on compare cette valeur d'écart de temps Delta.t avec une valeur d'écart de temps de référence résultant d'une onde de pression au point de génération théorique (F1).

9. Procédé selon la revendication 7 ou 8, caractérisé en ce que le point de génération théorique (F1) est constitué par le foyer interne d'un générateur ellipsoïdal tronqué (16).

10. Procédé selon la revendication 9, caractérisé en ce qu'on dispose les deux positions connues du capteur (12, 13) à égale distance du foyer interne (F1), et de préférence encore symétriquement par rapport au grand axe du réflecteur ellipsoïdal tronqué (16).

11. Procédé selon l'une des revendications 1 à 10, caractérisé en ce qu'on utilise deux capteurs de pression (12, 13) que l'on dispose dans un plan de symétrie longitudinal du générateur (14), en particulier passant par les électrodes (20, 22) dans le cas d'un générateur d'ondes de pression par décharge électrique entre deux électrodes.

12. Procédé selon l'une des revendications 7 à 11, caractérisé en ce qu'on détermine la position du point réel (E) de génération d'ondes de pression à partir de la formule mathématique suivante :

$$d = k \times Delta.t$$

dans laquelle $k = D : (LO \times v)$ .

D étant la distance entre deux positions différentes connues du capteur (12, 13),

LO est la distance entre le point théorique ou idéal (F1) de génération de l'onde de pression et la position connue du capteur (12 ou 13).

v est la distance de propagation du son dans le liquide de couplage (18), par exemple l'eau (1 480 m/s),

d est la valeur de décalage entre le point théorique ou idéal (F1) de génération d'ondes de pression et le point réel (E) de génération de l'onde de pression,

Delta.t est la différence de temps de trajet mesurée.

13. Procédé selon l'une des revendications 7 à 12, caractérisé en ce qu'on détermine la position du point réel (E) par rapport au point théorique (F1) en comparant la valeur de Delta.t avec une courbe étalonnée donnant le décalage (d) en fonction de Delta.t.

14. Procédé selon l'une des revendications 7 à 13, caractérisé en ce qu'on détermine la variation de la dispersion de la différence de temps Delta.t et on utilise avantageusement la variation de la dispersion pour maintenir l'écartement entre les électrodes (20, 22) constant.

**15.** Procédé selon la revendication 14, caractérisé en ce qu'on détermine l'écartement entre les électrodes (20, 22) à partir d'une courbe étalonnée donnant l'écartement entre les électrodes en fonction de la dispersion, de préférence l'écart-type, de la différence de temps Delta.t.

**16.** Procédé selon la revendication 1, caractérisé en ce que la correction précitée des caractéristiques du générateur consiste à régler le point réel de génération des ondes de pression, ce réglage comprenant les étapes de déterminer le décalage entre le point réel (E) de génération des ondes de pression et le point théorique (F1) de génération des ondes de pression, et de corriger la valeur de décalage (d) en fonction de la position recherchée du point de génération des ondes de pression.

**17.** Procédé selon la revendication 1, caractérisé en ce que la correction précitée des caractéristiques du générateur d'ondes de pression consiste à régler le volume de la tache focale, ce réglage comprenant l'étape de réaliser un décalage prédéterminé (D) du point réel (E) de génération d'ondes de pression, par rapport au point théorique (F1) de génération d'ondes de pression, en fonction du volume recherché de la tache focale.

**18.** Procédé selon la revendication 17, caractérisé en ce que, dans le cadre d'un générateur ellipsoïdal tronqué (16) comportant un foyer interne (F1) et un foyer externe (F2), le point théorique de génération d'ondes de pression est constitué par le foyer interne (F1), la tache focale étant positionnée au foyer externe (F2).

**19.** Procédé selon la revendication 1, caractérisé en ce que la correction précitée des caractéristiques du générateur d'ondes de pression consiste en un réglage de la valeur de pression des ondes de pression focalisées au foyer externe (F2) d'un générateur ellipsoïdal tronqué (16), ce réglage comprenant l'étape de réaliser un décalage prédéterminé du point réel (E) de génération d'ondes de pression et/ou un écartement des électrodes, en fonction de la valeur de la pression recherchée au foyer externe (F2).

**20.** Procédé selon la revendication 1, caractérisé en ce que la correction précitée des caractéristiques du générateur d'ondes de pression consiste à régler l'écartement des électrodes dudit générateur (14) qui comprend un récepteur ellipsoïdal tronqué (16) rempli d'un liquide de couplage (18), ledit réglage comprenant les étapes de détecter la valeur de pression des ondes de pression émises, d'avancer les électrodes (20, 22), de détecter une diminution brusque de la pression, indiquant la mise en contact des électrodes (20, 22), et de procéder à un retrait prédéterminé des électrodes (20, 22), de manière à aboutir à un écartement précis des électrodes.

**21.** Appareil (10) de contrôle de l'efficacité d'ondes de pression, de préférence en temps réel, émises par un générateur (14) d'ondes de pression de type focalisé, comprenant
au moins un capteur (12, 13) d'un paramètre caractéristique d'une onde de pression directe non focalisée, par exemple la pression, capable de capter ledit paramètre de l'onde de pression directe non focalisée, de position fixe relativement au générateur (14), et des moyens (24) de traitement du signal émis par le capteur lors de la réception de l'onde de pression directe non focalisée par le capteur (12, 13), afin de connaître l'efficacité de l'onde de pression en fonction des caractéristiques du générateur (14), et éventuellement des moyens (30) de correction des caractéristiques du générateur (14) d'onde de pression.

**22.** Appareil selon la revendication 21, caractérisé en ce que les moyens de traitement (24) précités du signal comprennent un dispositif électronique de traitement du signal, ainsi que des moyen de calcul (30), par exemple comprenant un ordinateur ou microordinateur, qui est avantageusement capable d'ordonner des corrections des caractéristiques du générateur d'ondes de pression en consistuant ainsi simultanément les moyens de correction précités.

**23.** Appareil selon la revendication 21 ou 22, caractérisé en ce que les corrections sont un écartement différent des électrodes, un décalage volontaire du point réel de génération des ondes de pression par une dissymétrie volontaire de positionnement des électrodes (20, 22) par rapport au point théorique (E) de génération des ondes de pression, une combinaison des deux, une valeur différente de la pression de l'onde de pression générée, par exemple en réglant la valeur de la tension de la source haute tension, ou enfin un recentrage parfait sur le point de génération théorique (F1) des ondes de pression, en particulier le foyer interne (F1) d'un ellipsoïde tronqué (16).

**24.** Appareil selon l'une des revendications 21 à 23, caractérisé en ce qu'il comprend deux capteurs de pression (12, 13) disposés à égale distance du foyer interne (F1) et symétriquement par rapport au grand axe du réflecteur ellipsoïdal (16), de préférence dans un plan de symétrie longitudinale du générateur (14) passant par les électrodes (20, 22).

**25.** Appareil selon l'une des revendications 21 à 24, caractérisé en ce que chaque capteur (12, 13) est monté sur un élément de positionnement (32) pouvant être fixé provisoirement au sommet du réflecteur ellipsoïdal (16) ; avantageusement, cet élément de positionnement (32) présentant une partie incurvée radialement vers l'intérieur (33) comportant un orifice dans lequel est inséré le capteur (12 ou 13), permettant d'orienter de manière précise le capteur (12 ou 13) en direction du foyer (F1), donc du point de génération (E) des ondes de pression.

**26.** Appareil selon l'une des revendications 21 à 25, caractérisé en ce que chaque capteur (12, 13) est incorporé dans la paroi du réflecteur ellipsoïdal (10).

**27.** Procédé de contrôle de l'efficacité d'ondes de pression émises par un générateur d'ondes de pression de type focalisé, selon lequel

- ledit générateur (14) focalisé comprend un ellipsoïde tronqué (16), ayant un foyer interne (F1) où sont générées les ondes de pression par décharge électrique entre deux électrodes (20, 22), et un foyer externe (F2) où les ondes de pression sont focalisées, la décharge étant générée par une source haute tension ;
- on prévoit au moins un capteur d'un paramètre caractéristique d'une onde de pression directe non focalisée, par exemple la pression (12, 13) capable de capter ledit paramètre de ladite onde de pression directe non focalisée ;
- on dispose ce capteur (12, 13) sur le trajet de ladite onde de pression directe non focalisée de sorte que ledit capteur présente une position fixe relativement audit générateur d'ondes de pression ;
- on traite le signal émis par ledit capteur (12, 13) lors de la réception d'une onde de pression directe non focalisée en provenance d'un point (E) de génération d'ondes de pression, afin de connaître l'efficacité de l'onde de pression, fonction des caractéristiques du générateur (14) ; et
- éventuellement on procéde à une correction des caractéristiques du générateur (14) d'ondes de pression en réglant la valeur de la tension de la source haute tension.

**28.** Appareil (10) de contrôle de l'efficacité d'ondes de pression émis par un générateur (14) d'ondes de pression de type focalisé, comprenant un ellipsoïde tronqué (16), ayant un foyer interne (F1) où sont générées les ondes de pression par décharge électrique entre deux électrodes (20, 22), et un foyer externe (F2) où les ondes de pression sont focalisées, la décharge étant générée par une source haute tension, il comprend au moins un capteur (12, 13) d'un paramètre caractéristique d'une onde de pression directe non focalisée, par exemple la pression, capable de capter ledit paramètre de l'onde de pression directe non focalisée, de position fixe relativement audit générateur (14) et des moyens (24) de traitement du signal émis par le capteur lors de la réception de l'onde de pression directe non focalisée par le capteur (12, 13), afin de connaître l'efficacité de l'onde de pression en fonction des caractéristiques du générateur (14) et éventuellement des moyens (30) de correction des caractéristiques du générateur (14) d'ondes de pression, capables de régler la valeur de la tension de la source haute tension.

**Claims**

**1.** Process for monitoring the efficiency of pressure waves emitted by a pressure wave generator, of the focused type, according to which:

- at least one sensor of a characteristic parameter of a non-focused direct pressure wave is provided, for example the pressure (12, 13), capable of sensing said parameter of said non-focused direct pressure wave;
- this sensor (12, 13) is disposed on the path of said non-focused direct pressure wave such that said sensor has a fixed position with respect to said pressure wave generator;
- the signal emitted by said sensor (12, 13) is processed during reception of a non-focused direct pressure wave coming from a point (E) of pressure wave generation, in order to know the efficiency of the pressure wave, as a function of the characteristics of the generator (14); and
- possibly correcting the characteristics of the pressure wave generator (14).

**2.** Process according to claim 1, characterized in that said sensor (12, 13), receives each pressure wave and the signal emitted for each pressure wave which is processed in order to know in real time the efficiency of the pressure wave and possibly to proceed in real time with a correction of the characteristics of the generator (14), is registered.

**3.** Process according to claim 1 or 2, characterized in that the signal is processed to determine the value of the pressure of the pressure wave.

4. Process according to claim 3, characterized in that, within the framework of a generator focusing at a focal point (F2), for example an outer focus, the value of the pressure of the non-focused direct pressure wave is used for calculating the value of the pressure focused at the focal point (F2).

5. Process according to one of claims 1 to 4, characterized in that, within the framework of a focused generator (14) comprising a truncated ellipsoid (16), having an inner focus (F1) where pressure waves are generated by electrical discharge between two electrodes (20, 22), and a outer focus (F2) where the pressure waves are focused, the value of the pressure wave is used for adjusting the initial distance between electrodes (20, 22).

6. Process according to one of claims 1 to 5, characterized in that the time of passage of the pressure wave from the point of generation (E) to the sensor (12, 13) is detected and this time of passage is compared with a reference time of passage for a wave emitted at the theoretical point of generation (F1).

7. Process according to claim 6, characterized in that the time of passage from the point of generation (E) to two different, known positions of the sensor (12, 13) is detected, and the difference in time Delta.t taken by each wave to arrive at each of the two known positions of the sensor (12, 13) is calculated, and the value of the time difference Delta.t is used for determining the real position (E) of the point of generation of the pressure wave.

8. Process according to claim 7, characterized in that this time difference value Delta.t is compared with a reference time difference value resulting from a pressure wave at the theoretical point of generation (F1).

9. Process according to claim 7 or 8, characterized in that the theoretical point of generation (F1) is constituted by the inner focus of a truncated ellipsoidal generator (16).

10. Process according to claim 9, characterized in that the two known positions of the sensor (12, 13) are disposed at equi-distance from the inner focus (F1) and preferably symmetrically with respect to the major axis of the truncated ellipsoidal reflector (16).

11. Process according to one of claims 1 to 10, characterized in that two pressure sensors (12, 13) are used, which are disposed in a longitudinal plane of symmetry of the generator (14), in particular passing through the electrodes (20, 22) in the case of a pressure wave generator employing electrical discharge between two electrodes.

12. Process according to one of claims 7 to 11, characterized in that the position of the real point (E) of pressure wave generation is determined from the following mathematical formula:

$$d = k \times Delta.t$$

in which $k = D : (LO \times v)$.

D being the distance between two different, known positions of the sensor (12, 13),

LO is the distance between the theoretical or ideal point (F1) of pressure wave generation and the known position of the sensor (12 or 13),

v is the speed of propagation of sound in the coupling liquid (18), for example water (1480 m/s),

d is the shift value between the theoretical or ideal point (F1) of pressure wave generation and the real point (E) of the pressure wave generation,

Delta.t is the time difference of passage measured.

13. Process according to one of claims 7 to 12, characterized in that the position of the real point (E) with respect to the theoretical point (F1) is determined by comparing the value of Delta.t with a calibrated curve giving the shift (d) as a function of Delta.t.

14. Process according to one of claims 7 to 13, characterized in that the variation of the dispersion of the time difference Delta.t is determined and the variation of the dispersion is advantageously used for maintaining the distance between the electrodes (20, 22) constant.

15. Process according to claim 14, characterized in that the distance between the electrodes (20, 22) is determined from a calibrated curve giving the distance between the electrodes as a function of the dispersion, preferably the standard deviation, of the time difference Delta.t.

16. Process according to claim 1, characterized in that said correction of the characteristics of the generator consists in adjusting the real point of generation of the pressure waves, such adjustment comprising the steps of determining the shift between the real point (E) of generation of the pressure waves and the theoretical point (F1) of generation of the pressure waves, and of correcting the value of shift (d) as a function of the desired position of the point of generation of the pressure waves.

17. Process according to claim 1, characterized in that said correction of the characteristics of the pressure wave generator consists in adjusting the volume of the focal spot, such adjustment comprising the step of effecting a predetermined shift (D) of the real point (E) of generation of pressure waves, with respect to the theoretical point (F1) of generation of pressure waves, as a function of the desired volume of the focal spot.

18. Process according to claim 17, characterized in that, within the framework of a truncated ellipsoidal generator (16) comprising an inner focus (F1) and an outer focus (F2), the theoretical point of pressure wave generation is constituted by the inner focus (F1), the focal spot being positioned at the outer focus (F2).

19. Process according to claim 1, characterized in that said correction of the characteristics of the pressure wave generator consists in an adjustment of the value of pressure of the pressure waves focused at the outer focus (F2) of a truncated ellipsoidal generator (16), such adjustment comprising the step of effecting a predetermined shift of the real point (E) of pressure wave generation and/or a spacing apart of the electrodes, as a function of the value of the desired pressure at the outer focus (F2).

20. Process according to claim 1, characterized in that said correction of the characteristics of the pressure wave generator consists in adjusting the distance between the electrodes of said generator (14) which comprises a truncated ellipsoidal receiver (16) filled with a coupling liquid (18), such adjustment comprising the steps of detecting the pressure value of the pressure waves emitted, of advancing the electrodes (20, 22), of detecting a sudden reduction in the pressure, indicating the contacting of the electrodes (20, 22), and of proceeding with a predetermined withdrawal of the electrodes (20, 22), so as to arrive at a precise spaced apart relationship of the electrodes.

21. Apparatus (10) for monitoring the efficiency of pressure waves, preferably in real time, emitted by a pressure wave generator (14) of the focused type, comprising,
    at least one sensor (12, 13) of a characteristic parameter of a non-focused direct pressure wave, for example the pressure, capable of sensing said parameter of the non-focused direct pressure wave, of fixed position with respect to the generator (14), and signal processing means (24) for processing the signal emitted by the sensors during reception of the non-focused direct pressure wave by the sensor (12, 13), in order to know the efficiency of the pressure wave as a function of the characteristics of the generator (14), and possibly correction means (30) for correcting the characteristics of the pressure wave generator (14).

22. Apparatus according to claim 21, characterized in that said signal processing means (24) for processing the signal comprise an electronic device for processing the signal, as well as calculating means (30), for example comprising a computer or micro-computer, which is advantageously capable of ordering corrections of the characteristics of the pressure wave generator, thus simultaneously constituting said correction means.

23. Apparatus according to claim 21 or 22, characterized in that the corrections are a different distance between the electrodes, a voluntary shift of the real point of pressure wave generation by a voluntary dissymmetry of positioning of the electrodes (20, 22) with respect to the theoretical point (E) of pressure wave generation, a combination of the two, a different value of the pressure of the pressure wave generated, for example by adjusting the value of the voltage of the high voltage source, or finally a perfect recentering on the theoretical point of generation (F1) of the pressure waves, in particular the inner focus (F1) of a truncated ellipsoid (16).

24. Apparatus according to one of claims 21 to 23, characterized in that it comprises two pressure sensors (12, 13) disposed at equi-distance from the inner focus (F1) and symmetrically with respect to the major axis of the ellipsoidal reflector (16), preferably in a longitudinal plane of symmetry of the generator (14) passing through the electrodes (20, 22).

25. Apparatus according to one of claims 21 to 24, characterized in that each sensor (12, 13) is mounted on a positioning element (32) that can be temporarily fixed to the apex of the ellipsoidal reflector (16); advantageously, this positioning element (32) presenting a part curved radially inwardly (33) comprising an orifice in which is inserted the sensor (12 or 13), making it possible to orient the sensor (12 or 13) precisely in the direction of the focus (F1), therefore of the point of generation (E) of the pressure waves.

26. Apparatus according to one of claims 21 to 25, characterized in that each sensor (12, 13) is incorporated in the wall of the ellipsoidal reflector (10).

27. Process for monitoring the efficiency of pressure waves emitted by a pressure wave generator of the focused type, according to which:

- said focused generator (14) comprises a truncated ellipsoid (16), having an inner focus (F1) where pressure waves are generated by electrical discharge between two electrodes (20, 22), and an outer focus (F2) where the pressure waves are focused, the discharge being generated by a high voltage source;
- at least one sensor of a characteristic parameter of a non-focused direct pressure wave is provided, for example the pressure (12, 13), capable of sensing said parameter of said non-focused direct pressure wave;
- this sensor (12, 13) is disposed on the path of said non-focused direct pressure wave such that said sensor has a fixed position with respect to said pressure wave generator;
- the signal emitted by said sensor (12, 13) is processed during reception of a non-focused direct pressure wave coming from a point (E) of pressure wave generation, in order to know the efficiency of the pressure wave, as a function of the characteristics of the generator (14); and
- possibly correcting the characteristics of the pressure wave generator (14) by adjusting the value of the voltage of the high voltage source.

28. Apparatus (10) for monitoring the efficiency of pressure waves, emitted by a pressure wave generator (14) of the focused type, comprising a truncated ellipsoid (16), having an inner focus (F1) where pressure waves are generated by electrical discharge between two electrodes (20, 22), and an outer focus (F2) where the pressure waves are focused, the discharge being generated by a high voltage source, it further comprises at least one sensor (12, 13) of a characteristic parameter of a non-focused direct pressure wave, for example the pressure, capable of sensing said parameter of the non-focused direct pressure wave, of fixed position with respect to the generator (14), and signal processing means (24) for processing the signal emitted by the sensor during reception of the non-focused direct pressure wave by the sensor (12, 13), in order to know the efficiency of the pressure wave as a function of the characteristics of the generator (14), and possibly correction means (30) for correcting the characteristics of the pressure wave generator (14), capable of adjusting the value of the voltage of the high voltage source.

## Patentansprüche

1. Verfahren zum Steuern des Wirkungsgrades von Druckwellen, die von einem Druckwellengenerator vom fokussierten Typ emittiert werden, gemäß welchem Verfahren:

- zumindest ein Meßfühler (12, 13) für einen charakteristischen Parameter einer direkten unfokussierten Druckwelle, beispielsweise den Druck, vorgesehen wird, der diesen Parameter der direkten unfokussierten Druckwelle erfassen kann;
- dieser Meßfühler (12, 13) auf dem Weg der direkten unfokussierten Druckwelle derart angeordnet wird, daß der Meßfühler eine festgelegte Position relativ zum Druckwellengenerator einnimmt;
- das vom Meßfühler (12, 13) beim Empfang einer direkten unfokussierten Druckwelle, die von einem Erzeugungspunkt (E) der Druckwellen ausgeht, abgegebene Signal verarbeitet wird, um den Wirkungsgrad der Druckwelle als Funktion der Charakteristika des Generators (14) zu ermitteln; und
- gegebenenfalls eine Korrektur der Charakteristika des Druckwellengenerators (14) vorgenommen wird.

2. Verfahren nach Anspruch 1, dadurch gekennzeichnet, daß der Meßfühler (12, 13) jede Druckwelle empfängt, und das für jede Druckwelle abgegebene Signal registriert wird, welches verarbeitet wird, um in Echtzeit den Wirkungsgrad der Druckwelle zu ermitteln und gegebenenfalls in Echtzeit eine Korrektur der Charakteristika des Generators (14) vorzunehmen.

3. Verfahren nach Anspruch 1 oder 2, dadurch gekennzeichnet, daß das Signal zur Bestimmung des Druckwerts der Druckwelle verarbeitet wird.

4. Verfahren nach Anspruch 3, dadurch gekennzeichnet, daß im Fall eines Generators, der auf einen Brennpunkt (F2) fokussiert ist, beispielsweise einen äußeren Brennpunkt, der Druckwert der direkten unfokussierten Druckwelle zur Berechnung des auf den Brennpunkt (F2) fokussierten Druckwerts verwendet wird.

5. Verfahren nach einem der Ansprüche 1 bis 4, dadurch gekennzeichnet, daß im Fall eines fokussierten Generators (14), der ein abgeschnittenes Ellipsoid (16) mit einem inneren Brennpunkt (F1), in dem die Druckwellen durch eine elektrische Entladung zwischen zwei Elektroden (20, 22) erzeugt werden, und einem äußeren Brennpunkt (F2), auf den die Druckwellen fokussiert sind, aufweist, der Druckwellenwert zur Einstellung des anfänglichen Abstands der Elektroden (20, 22) verwendet wird.

6. Verfahren nach einem der Ansprüche 1 bis 5, dadurch gekennzeichnet, daß die Wegzeit der Druckwelle vom Erzeugungspunkt (E) bis zum Meßfühler (12, 13) detektiert wird, und diese Wegzeit mit einer Referenz-Wegzeit für eine an einem theoretischen Erzeugungspunkt (F1) emittierte Welle verglichen wird.

7. Verfahren nach Anspruch 6, dadurch gekennzeichnet, daß die Wegzeit vom Erzeugungspunkt (E) bis zu zwei verschiedenen bekannten Positionen des Meßfühlers (12, 13) detektiert wird, und die Zeitdifferenz Delta.t, die jede Welle zum Erreichen der beiden bekannten Positionen des Meßfühlers (12, 13) benötigt, berechnet wird, und der Wert der Zeitdifferenz Delta.t zur Bestimmung der tatsächlichen Position (E) des Erzeugungspunkts der Druckwelle verwendet wird.

8. Verfahren nach Anspruch 7, dadurch gekennzeichnet, daß dieser Wert der Zeitdifferenz Delta.t mit einem Wert einer Referenz-Zeitdifferenz, der sich aus einer Druckwelle am theoretischen Erzeugungspunkt (F1) ergibt, verglichen wird.

9. Verfahren nach Anspruch 7 oder 8, dadurch gekennzeichnet, daß der theoretische Erzeugungspunkt (F1) vom inneren Brennpunkt eines abgeschnittenen ellipsoidförmigen Generators (16) gebildet wird.

10. Verfahren nach Anspruch 9, dadurch gekennzeichnet, daß die zwei bekannten Positionen des Meßfühlers (12, 13) in demselben Abstand vom inneren Brennpunkt (F1), und vorzugsweise auch symmetrisch in bezug auf die Hauptachse des abgeschnittenen ellipsoidförmigen Reflektors (16), angeordnet werden.

11. Verfahren nach einem der Ansprüche 1 bis 10, dadurch gekennzeichnet, daß im Fall eines Druckwellengenerators mittels elektrischer Entladung zwischen zwei Elektroden zwei Druckmeßfühler (12, 13) verwendet werden, die in einer insbesondere durch die Elektroden (20, 22) hindurchgehenden Längssymmetrieebene des Generators (14) angeordnet werden.

12. Verfahren nach einem der Ansprüche 7 bis 11, dadurch gekennzeichnet, daß die Position des tatsächlichen Erzeugungspunkts (E) der Druckwellen aus der folgenden mathematischen Beziehung bestimmt wird:

$$d = k \times Delta.t$$

worin k = D: (LO x v) ist,
    wobei D die Distanz zwischen zwei verschiedenen bekannten Positionen des Meßfühlers (12, 13) ist,
    LO die Distanz zwischen dem theoretischen oder idealen Erzeugungspunkt (F1) der Druckwelle und der bekannten Position des Meßfühlers (12 oder 13) ist,
    v die Distanz der Schallausbreitung in der Kupplungsflüssigkeit (18), beispielsweise Wasser (1480 m/s) ist,
    d der Wert der Verschiebung zwischen dem theoretischen oder idealen Erzeugungspunkt (F1) der Druckwellen und dem tatsächlichen Erzeugungspunkt (E) der Druckwelle ist, und
    Delta.t die Zeitdifferenz des Meßwegs ist.

13. Verfahren nach einem der Ansprüche 7 bis 12, dadurch gekennzeichnet, daß die Position des tatsächlichen Punkts (E) in bezug auf den theoretischen Punkt (F1) durch den Vergleich des Werts von Delta.t mit einer Kalibrierkurve, welche die Verschiebung (d) als Funktion von Delta.t angibt, bestimmt wird.

14. Verfahren nach einem der Ansprüche 7 bis 13, dadurch gekennzeichnet, daß die Variation der Verteilung der Zeitdifferenz Delta.t bestimmt wird, und die Variation der Verteilung vorteilhaft verwendet wird, um den Abstand zwischen den Elektroden (20, 22) konstant zu halten.

15. Verfahren nach Anspruch 14, dadurch gekennzeichnet, daß der Abstand zwischen den Elektroden (20, 22) aus einer Kalibrierkurve bestimmt wird, die den Abstand zwischen den Elektroden als Funktion der Verteilung, vorzugsweise die Standardabweichung, der Zeitdifferenz Delta.t angibt.

16. Verfahren nach Anspruch 1, dadurch gekennzeichnet, daß die Korrektur der Charakteristika des Generators in der Einstellung des tatsächlichen Erzeugungspunkts der Druckwellen besteht, wobei diese Einstellung die Schritte umfaßt, daß die Verschiebung zwischen dem tatsächlichen Erzeugungspunkt (E) der Druckwellen und dem theoretischen Erzeugungspunkt (F1) der Druckwellen bestimmt und der Wert der Verschiebung (d) als Funktion der gesuchten Position des Erzeugungspunkts der Druckwellen korrigiert wird.

17. Verfahren nach Anspruch 1, dadurch gekennzeichnet, daß die Korrektur der Charakteristika des Druckwellengenerators in der Einstellung des Volumens des Brennflecks besteht, wobei diese Einstellung den Schritt umfaßt, daß eine vorherbestimmte Verschiebung (D) des tatsächlichen Erzeugungspunkts (E) der Druckwellen in bezug auf den theoretischen Erzeugungspunkt (F1) der Druckwellen als Funktion des gesuchten Volumens des Brennflecks bewirkt wird.

18. Verfahren nach Anspruch 17, dadurch gekennzeichnet, daß im Fall eines abgeschnittenen ellipsoidförmigen Generators (16) mit einem inneren Brennpunkt (F1) und einem äußeren Brennpunkt (F2) der theoretische Erzeugungspunkt der Druckwellen vom inneren Brennpunkt (F1) gebildet wird, wobei der Brennfleck im äußeren Brennpunkt (F2) angeordnet ist.

19. Verfahren nach Anspruch 1, dadurch gekennzeichnet, daß die Korrektur der Charakteristika des Druckwellengenerators in der Einstellung des Druckwerts von auf den äußeren Brennpunkt (F2) eines abgeschnittenen ellipsoidförmigen Generators (16) fokussierten Druckwellen besteht, wobei diese Einstellung den Schritt umfaßt, daß eine vorherbestimmte Verschiebung (D) des tatsächlichen Erzeugungspunkts (E) der Druckwellen und/oder ein Abstand der Elektroden als Funktion des gesuchten Druckwerts im äußeren Brennpunkt (F2) realisiert wird.

20. Verfahren nach Anspruch 1, dadurch gekennzeichnet, daß die Korrektur der Charakteristika des Druckwellengenerators in der Einstellung des Abstands der Elektroden des Generators (14) besteht, welcher einen abgeschnittenen ellipsoidförmigen Reflektor (16) aufweist, der mit einer Kupplungsflüssigkeit (18) gefüllt ist, wobei die Einstellung die Schritte umfaßt, daß der Druckwert der emittierten Druckwelle detektiert wird, die Elektroden (20, 22) vorgeschoben werden, ein plötzlicher Druckabfall detektiert wird, der den Kontakt der Elektroden (20, 22) anzeigt, und ein vorherbestimmtes Zurückschieben der Elektroden (20, 22) vorgenommen wird, um einen genauen Abstand der Elektroden zu erhalten.

21. Vorrichtung (10) zum Steuern des Wirkungsgrades von Druckwellen, vorzugsweise in Echtzeit, die von einem Druckwellengenerator (14) vom fokussierten Typ emittiert werden, mit
zumindest einem Meßfühler (12, 13) für einen charakteristischen Parameter einer direkten unfokussierten Druckwelle, beispielsweise den Druck, welcher Meßfühler diesen Parameter der direkten unfokussierten Druckwelle erfassen kann, in einer festgelegten Position relativ zum Generator (14), und Mitteln (24) zum Verarbeiten des vom Meßfühler beim Empfang einer direkten unfokussierten Druckwelle durch den Meßfühler (12, 13) abgegebenen Signals, um den Wirkungsgrad der Druckwelle als Funktion der Charakteristika des Generators (14) zu ermitteln, und gegebenenfalls Mitteln (30) zum Korrigieren der Charakteristika des Druckwellengenerators (14).

22. Vorrichtung nach Anspruch 21, dadurch gekennzeichnet, daß die Mittel (24) zum Verarbeiten des Signals eine elektronische Signalverarbeitungseinrichtung und Rechnermittel (30) aufweisen, die beispielsweise einen Rechner oder Mikrorechner enthalten, der vorteilhaft die Korrekturen der Charakteristika des Druckwellengenerators berechnen kann und so gleichzeitig die Korrekturmittel bildet.

23. Vorrichtung nach Anspruch 21 oder 22, dadurch gekennzeichnet, daß die Korrekturen sind: ein unterschiedlicher Abstand der Elektroden, eine absichtliche Verschiebung des tatsächlichen Erzeugungspunkts der Druckwellen durch eine absichtliche Asymmetrie der Anordnung der Elektroden (20, 22) in bezug auf den theoretischen Erzeugungspunkt (E) der Druckwellen, eine Kombination von beidem, ein unterschiedlicher Druckwert der erzeugten Druckwelle, beispielsweise durch die Einstellung des Spannungswerts der Hochspannungsquelle, oder schließlich eine vollständige Neuausrichtung am theoretischen Erzeugungspunkt (F1) der Druckwellen, insbesondere am inneren Brennpunkt (F1) eines abgeschnittenen Ellipsoids (16).

24. Vorrichtung nach einem der Ansprüche 21 bis 23, dadurch gekennzeichnet, daß sie zwei Druckmeßfühler (12, 13) aufweist, die in demselben Abstand vom inneren Brennpunkt (F1) und symmetrisch in bezug auf die Hauptachse des ellipsoidförmigen Reflektors (16), vorzugsweise in einer durch die Elektroden (20, 22) hindurchgehenden Längssymmetrieebene des Generators (14), angeordnet sind.

25. Vorrichtung nach einem der Ansprüche 21 bis 24, dadurch gekennzeichnet, daß jeder Meßfühler (12, 13) auf einem Positionierungselement (32) angebracht ist, das provisorisch an der Spitze des ellipsoidförmigen Reflektors (16) fixiert werden kann; wobei dieses Positionierungselement (32) vorteilhaft einen radial zum Inneren gekrümmten Teil (33) mit einer Öffnung aufweist, in die der Meßfühler (12 oder 13) eingesetzt ist, wodurch der Meßfühler (12 oder 13) in der Richtung des Brennpunkts (F1) und daher des Erzeugungspunkts (E) der Druckwellen genau ausgerichtet werden kann.

26. Vorrichtung nach einem der Ansprüche 21 bis 25, dadurch gekennzeichnet, daß jeder Meßfühler (12, 13) in der Wand des ellipsoidförmigen Reflektors (16) enthalten ist.

27. Verfahren zum Steuern des Wirkungsgrades von Druckwellen, die von einem Druckwellengenerator vom fokussierten Typ emittiert werden, gemäß welchem:

- der fokussierte Generator (14) ein abgeschnittenes Ellipsoid (16) mit einem inneren Brennpunkt (F1), wo die Druckwellen durch eine elektrische Entladung zwischen zwei Elektroden (20, 22) erzeugt werden, und einem äußeren Brennpunkt (F2), wo die Druckwellen fokussiert werden, aufweist, wobei die Entladung durch eine Hochspannungsquelle bewirkt wird;
- zumindest ein Meßfühler (12, 13) für einen charakteristischen Parameter einer direkten unfokussierten Druckwelle, beispielsweise den Druck, vorgesehen wird, der diesen Parameter der direkten unfokussierten Druckwelle erfassen kann;
- dieser Meßfühler (12, 13) auf dem Weg der direkten unfokussierten Druckwelle derart angeordnet wird, daß der Meßfühler eine festgelegte Position relativ zum Druckwellengenerator einnimmt;
- das vom Meßfühler (12, 13) beim Empfang einer direkten unfokussierten Druckwelle, die von einem Erzeugungspunkt (E) der Druckwellen ausgeht, abgegebene Signal verarbeitet wird, um den Wirkungsgrad der Druckwelle als Funktion der Charakteristika des Generators (14) zu ermitteln; und
- gegebenenfalls eine Korrektur der Charakteristika des Druckwellengenerators (14) vorgenommen wird, indem der Spannungswert der Hochspannungsquelle eingestellt wird.

28. Vorrichtung (10) zum Steuern des Wirkungsgrades von Druckwellen, die von einem Druckwellengenerator (14) vom fokussierten Typ emittiert werden, mit einem abgeschnittenen Ellipsoid (16) mit einem inneren Brennpunkt (F1), wo die Druckwellen durch eine elektrische Entladung zwischen zwei Elektroden (20, 22) erzeugt werden, und einem äußeren Brennpunkt (F2), wo die Druckwellen fokussiert werden, wobei die Entladung durch eine Hochspannungsquelle bewirkt wird, mit zumindest einem Meßfühler (12, 13) für einen charakteristischen Parameter einer direkten unfokussierten Druckwelle, beispielsweise den Druck, welcher Meßfühler diesen Parameter der direkten unfokussierten Druckwelle erfassen kann, in einer festgelegten Position relativ zum Generator (14), und Mitteln (24) zum Verarbeiten des vom Meßfühler (12, 13) beim Empfang einer direkten unfokussierten Druckwelle durch den Meßfühler (12, 13) abgegebenen Signals, um den Wirkungsgrad der Druckwelle als Funktion der Charakteristika des Generators (14) zu ermitteln, und gegebenenfalls Mitteln (30) zum Korrigieren der Charakteristika des Druckwellengenerators (14), die den Spannungswert der Hochspannungsquelle einstellen können.

fig.1

EP 0 535 103 B1

fig.2

Fig.3

Delta t =f(d)

fig.4

décentrage d (mm)

EP 0 535 103 B1

**Amplitude de l'onde directe**

*fig.5*

Pression (Bars) vs Ecartement (mm)

EP 0 535 103 B1

fig.6

Ecart-type en fonction de l'écartement

Ecart-type sur Deltat (ns)

Ecartement (mm)